# FASCICULE DE BREVET EUROPEEN

(11) **EP 2 952 951 B1**
(45) Date de publication et mention de la délivrance du brevet: **19.01.2022**
(21) Numéro de dépôt: 15168071.7
(22) Date de dépôt: 19.05.2015
(51) Int. Cl.: G02B 27/14, G01D 5/32, G01B 11/00, G02B 19/00, G01V 8/12, G01V 8/20

(54) **SYSTÈME DE DÉTECTION**
ERFASSUNGSSYSTEM
DETECTION SYSTEM

(30) Priorité: 02.06.2014 FR 1454958
(43) Date de publication de la demande: 09.12.2015
(73) Titulaire: Schneider Electric Industries SAS, 92500 Rueil-Malmaison (FR)
(72) Inventeur: Laforest, Benoît, 76440 Sommery (FR)
(74) Mandataire: Mouney, Jérôme

(56) Documents cités:
- EP-A2- 1 296 161
- WO-A1-02/086424
- DE-A1- 2 359 261
- GB-A- 2 151 808
- US-A- 4 487 477
- US-A- 5 767 506

## Description

### Domaine technique de l'invention

La présente invention se rapporte à un système de détection.

### Etat de la technique

De manière connue, une fourche optique comporte une première branche incluant une partie transmetteur et une deuxième branche incluant une partie récepteur.

La partie transmetteur comporte une source lumineuse générant un faisceau lumineux envoyé vers la partie récepteur. Le passage d'un objet entre les deux branches de la fourche est détecté lorsque le faisceau lumineux est interrompu par l'objet et donc lorsque la partie récepteur ne reçoit plus le faisceau lumineux transmis.

Pour certaines applications, par exemple pour la détection de plusieurs courroies entraînées en parallèle, il est nécessaire d'employer un système de détection de type fourche optique à plusieurs faisceaux. La partie transmetteur émet alors plusieurs faisceaux lumineux vers la partie récepteur. Pour cela, les solutions existantes, décrites dans les documents US4659185 et CN202092666U, utilisent une source lumineuse qui, en se réfléchissant sur un prisme optique, génère deux faisceaux lumineux ou plus. Dans ces solutions, il est possible de maîtriser les angles de réflexion de façon à générer un faisceau principal sur un axe et des faisceaux secondaires orientés. Le faisceau principal est propagé vers un second prisme, puis un troisième de manière à former plusieurs faisceaux orientés et de préférence parallèles entre eux. Ces solutions, développées pour limiter le nombre de sources lumineuses, ne permettent pas de générer un grand nombre de faisceaux réfléchis et/ou des longueurs de faisceaux importantes. En effet, chaque traversée d'un prisme réduit l'intensité du faisceau principal sortant, réduisant ainsi l'intensité des faisceaux orientés suivants. De ce fait, les intensités lumineuses reçues par les récepteurs ne sont pas équilibrées et la détermination des états de détection est complexifiée.

Les documents WO 02/086424 A1, US 4 487 477, WO 96/10809, EP 1 296 161 A2, GB 2 151 808 A et DT 23 59 261 A1 représentent une partie de l'état de la technique relatif à la présente invention.

Le but de l'invention est de proposer un système de détection multi-faisceaux dans lequel le nombre de sources lumineuses pilotées employées est limité et la détection du passage des objets est fiable.

### Exposé de l'invention

Ce but est atteint par un système de détection tel que revendiqué.

Avantageusement, le deuxième élément comporte une deuxième ouverture réalisée à travers la zone réfléchissante et agencée pour laisser passer une troisième partie du faisceau lumineux principal et la partie transmetteur comporte un troisième élément ayant une zone réfléchissante agencée pour générer un troisième faisceau lumineux réfléchi à partir de la troisième partie du faisceau lumineux principal.

Avantageusement, la première ouverture et la deuxième ouverture sont placées dans l'axe de la source lumineuse.

Avantageusement, la deuxième ouverture présente une section d'ouverture inférieure à celle de la première ouverture.

Avantageusement, la première ouverture présente une section d'ouverture inférieure au diamètre du faisceau lumineux principal.

Selon une première variante de réalisation, la partie récepteur comporte une première lentille convergente agencée pour faire converger le premier faisceau lumineux réfléchi sur le premier organe photorécepteur.

Selon cette première variante de réalisation, la partie récepteur comporte une deuxième lentille convergente agencée pour faire converger le deuxième faisceau lumineux réfléchi sur le deuxième organe photorécepteur.

Selon cette première variante de réalisation, la partie récepteur comporte une troisième lentille convergente agencée pour faire converger le troisième faisceau lumineux réfléchi sur le troisième organe photorécepteur.

Avantageusement, la source lumineuse est une diode électroluminescente.

### Brève description des figures

D'autres caractéristiques et avantages vont apparaître dans la description détaillée qui suit faite en regard des figures suivantes :
- la figure 1 illustre de manière schématique le système de détection de l'invention, agencé par exemple sous la forme d'une fourche optique,
- la figure 2 représente une variante, non couverte par la présente invention, de réalisation du système de détection
   de la figure 1,
- la figure 3 illustre, par une vue en coupe longitudinale, le principe de découpage du faisceau lumineux d'émission principal en plusieurs parties,
- la figure 4 représente un système de détection non couvert par la présente invention.

### Description détaillée d'au moins un mode de réalisation

Le système de détection de l'invention comporte une partie transmetteur 1 et une partie récepteur 2.

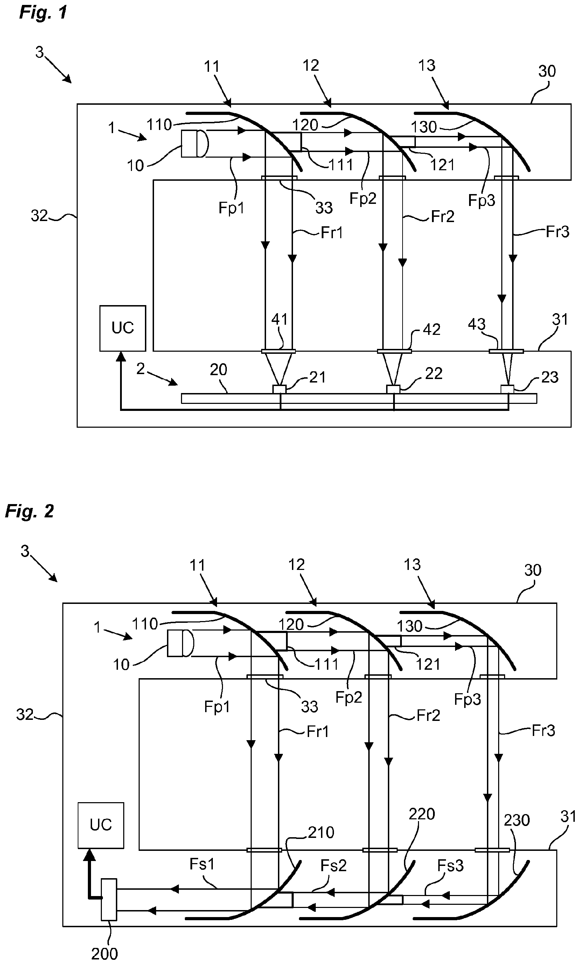

Le système de détection de l'invention peut être réalisé selon la variante de réalisation représentée sur la figure 1.

En référence à la figure 1, le système de l'invention prendra la forme d'une fourche optique 3 à deux branches 30, 31 parallèles reliées entre elles par une portion 32 centrale de liaison, la partie transmetteur étant agencée dans la première branche et la partie récepteur dans la deuxième branche.

La partie transmetteur 1 comporte une source lumineuse 10 agencée pour générer un faisceau lumineux, dit faisceau lumineux principal Fp. Avantageusement, cette source lumineuse 10 est une diode électroluminescente. La source lumineuse 10 est commandée à l'aide d'une unité de commande.

Le système de l'invention utilise le principe de l'éclateur optique qui consiste à diviser le faisceau lumineux principal Fp en plusieurs parties (Fp1, Fp2, Fp3) et à réfléchir chacune des parties du faisceau lumineux principal pour générer plusieurs faisceaux lumineux réfléchis, les faisceaux lumineux réfléchis étant transmis vers la partie récepteur 2 du système. Les faisceaux lumineux réfléchis présentent tous une valeur d'intensité lumineuse similaire, cette valeur étant suffisamment grande pour assurer la détection d'objets.

La description ci-dessous est effectuée pour générer et détecter trois faisceaux réfléchis mais ce nombre n'est pas limitatif et le principe de l'invention peut être employé pour générer et détecter de deux à n faisceaux lumineux réfléchis (n étant supérieur ou égal à 2).

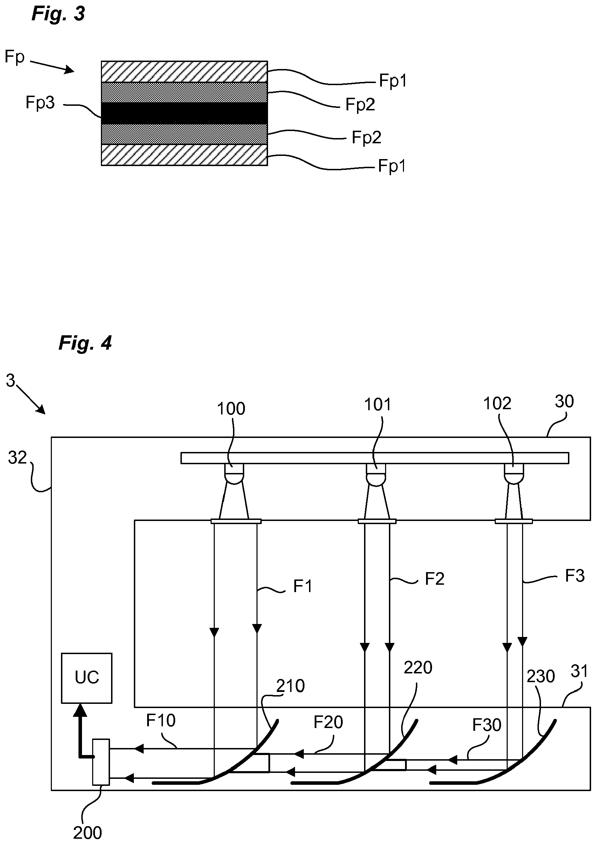

La partie transmetteur 1 comporte un premier élément 11 doté d'une zone réfléchissante 110 agencée pour générer un premier faisceau lumineux réfléchi Fr1 à partir d'une première partie Fp1 du faisceau lumineux principal Fp, cette première partie Fp1 du faisceau lumineux principal correspondant à sa couronne externe (figure 3). La zone réfléchissante comporte en outre une ouverture 111 formant un premier guide lumière agencé pour guider une deuxième partie Fp2 du faisceau lumineux principal Fp vers un deuxième élément 12, cette deuxième partie Fp2 du faisceau lumineux principal étant la partie située à l'intérieur de sa couronne externe.

Le deuxième élément 12 comporte également une zone réfléchissante 120 agencée pour générer un deuxième faisceau lumineux réfléchi Fr2 à partir de la deuxième partie Fp2 du faisceau lumineux principal.

Le système de l'invention permet ainsi de générer, à partir du faisceau lumineux principal, deux faisceaux lumineux réfléchis Fr1, Fr2 distincts à destination de la partie récepteur 2.

Avantageusement, la zone réfléchissante 120 du deuxième élément 12 peut comporter également une ouverture 121 formant un deuxième guide lumière destiné à guider une troisième partie Fp3 du faisceau lumineux principal Fp vers un troisième élément 13. L'ouverture 111 et l'ouverture 121 sont alignées dans l'axe du faisceau lumineux principal Fp généré par la source lumineuse 10.

Selon l'invention, afin de pouvoir éclater le faisceau lumineux en trois parties, la section d'ouverture de l'ouverture 121 est inférieure à la section d'ouverture de l'ouverture 111 et la section d'ouverture de l'ouverture 111 est inférieure au diamètre du faisceau lumineux principal Fp. Ce principe d'éclatement peut se généraliser pour la formation de n faisceaux lumineux réfléchis.

Le troisième élément 13 comporte également une zone réfléchissante 130 agencée pour réfléchir la troisième partie Fp3 du faisceau lumineux principal Fp et générer ainsi un troisième faisceau lumineux réfléchi Fr3.

Avantageusement, le premier élément 11, le deuxième élément 12 et le troisième élément 13 comportent chacun un miroir de type asphérique formant chacune des zones réfléchissantes 110, 120, 130 précitées. Les miroirs sont agencés de manière adjacente pour réfléchir chaque partie du faisceau lumineux principal Fp et générer, préférentiellement en parallèle, les trois faisceaux lumineux réfléchis Fr1, Fr2, Fr3, préférentiellement perpendiculairement au faisceau lumineux principal Fp.

Le boîtier de la fourche optique 3 comporte bien entendu des ouvertures 33 permettant de laisser passer les faisceaux lumineux réfléchis vers la partie récepteur.

Dans la première variante de réalisation représentée sur la figure 1, la partie récepteur 2 comporte plusieurs organes photorécepteurs 21, 22, 23 agencés chacun dans l'axe d'un faisceau lumineux réfléchi Fr1, Fr2, Fr3 distinct. La partie récepteur 2 comporte au moins deux organes photorécepteurs 21, 22 et avantageusement au moins trois organes photorécepteurs pour détecter les trois faisceaux lumineux réfléchis décrits ci-dessus.

Avantageusement, les organes photorécepteurs 21, 22, 23 sont fixés sur une même carte électronique 20 logée dans la deuxième branche 31 du boîtier de la fourche optique 3.

Avantageusement, pour chaque organe photorécepteur 21, 22, 23, la partie récepteur 2 comporte une lentille convergente 41, 42, 43 agencée pour faire converger le faisceau lumineux réfléchi vers l'organe photorécepteur qui lui est dédié. Chaque lentille convergente 41, 42, 43 est intégrée dans le boîtier, dans l'axe du faisceau lumineux réfléchi et de l'organe photorécepteur auxquels elle est associée.

Une unité de traitement UC intégrée au système ou externe à celui-ci est agencée pour traiter les signaux électriques en sortie de chaque organe photorécepteur 21, 22, 23 et déterminer des états de détection. Cette unité de traitement UC est par exemple fixée sur une carte électronique logée dans la portion centrale 32 de la fourche optique 3 et connectée à la partie récepteur 2.

Dans la deuxième variante de réalisation, non couverte par la présente invention, représentée sur la figure 2, la partie récepteur 2 comporte pour sa part un seul organe photorécepteur 200 vers lequel les faisceaux lumineux réfléchis Fr1, Fr2, Fr3 sont tous dirigés. Pour cela, la partie récepteur 2 comporte, pour chaque faisceau lumineux réfléchi, un élément muni d'une zone réfléchissante 210, 220, 230 agencée pour réfléchir respectivement le premier faisceau lumineux réfléchi Fr1, le deuxième faisceau lumineux réfléchi Fr2 et le troisième faisceau lumineux réfléchi Fr3 et diriger les faisceaux secondaires Fs1, Fs2, Fs3 ainsi formés vers l'organe photorécepteur 200. Chacun de ces éléments prend la forme d'un miroir asphérique. La zone réfléchissante 220 présente une ouverture en vue de laisser passer le faisceau lumineux secondaire Fs3 issu de la zone réfléchissante 230 et la zone réfléchissante 210 présente également une ouverture en vue de laisser passer les faisceaux lumineux secondaires Fs3, Fs2 issus respectivement des zones réfléchissantes 220 et 230. La section d'ouverture de l'ouverture de la zone réfléchissante 210 est supérieure à la section d'ouverture de l'ouverture de la zone réfléchissante 220 et est inférieure au diamètre du faisceau lumineux secondaire Fs1 issu de la réflexion du premier faisceau lumineux Fr1 réfléchi sur la zone réfléchissante 210. L'organe photorécepteur 200 est agencé pour se situer dans l'axe desdites ouvertures de manière à recueillir les faisceaux lumineux secondaires. Une unité de traitement UC intégrée au système ou externe à celui-ci est agencée pour traiter les signaux électriques en sortie de l'organe photorécepteur 200 et pour déterminer l'état de détection. Cette unité de traitement UC est par exemple fixée sur une carte électronique logée dans la portion centrale 32 de la fourche optique 3 et connectée à la partie récepteur 2. L'unité de traitement UC analyse le faisceau reçu sur l'organe photorécepteur 200 et pilote ou non un changement d'état selon l'état du faisceau recueilli.

Le système de détection de l'invention permet ainsi de générer plusieurs faisceaux lumineux en employant une seule source lumineuse 10, c'est-à-dire une seule diode électroluminescente, et une seule unité de commande de cette source lumineuse.

La nature réfléchissante des zones réfléchissantes des miroirs asphériques employés pourra par exemple être obtenue par un procédé de métallisation mis en œuvre sur une pièce incurvée en matériau plastique.

La taille des ouvertures réalisées à travers les zones réfléchissantes et leur rapport surfacique permettent de réaliser un équilibrage entre les intensités des faisceaux lumineux générés. Un autre équilibrage consiste à ajuster le gain de l'amplification des signaux électriques générés en sortie du ou des organes photorécepteurs.

En vue d'améliorer la distribution de l'intensité lumineuse sur la zone sensible de chaque organe photorécepteur 21, 22, 23, il est également possible d'ajouter un segment de fibre optique en entrée de l'organe photorécepteur.

En variante de réalisation et en reprenant toutes les caractéristiques décrites ci-dessus, un système de détection non couvert par la présente invention peut comporter plusieurs sources lumineuses et un seul organe photorécepteur 200. La figure 4 montre une telle architecture. Sur cette figure, la partie transmetteur 1 du système comporte trois sources lumineuses 100, 101, 102 composées chacune d'une diode électroluminescente. Chaque source génère un faisceau lumineux F1, F2, F3 à destination de la partie récepteur 2. La partie récepteur 2 employée est identique dans son architecture et dans son fonctionnement à celle décrite ci-dessus en liaison avec la figure 2. Les faisceaux F10, F20, F30 issus de la réflexion des faisceaux F1, F2, F3 sur les zones réfléchissantes 210, 220, 230 sont transmis vers l'organe photorécepteur 200.

## Revendications

1. Système de détection comprenant une partie transmetteur (1) et une partie récepteur (2), dans lequel la partie transmetteur (1) comporte au moins :
- Une source lumineuse (10) agencée pour générer un faisceau lumineux principal (Fp),
- Un premier élément (11) comprenant une zone réfléchissante (110) agencée pour générer un premier faisceau lumineux réfléchi (Fr1) à partir d'une première partie (Fp1) du faisceau lumineux principal et une première ouverture (111) réalisée à travers la zone réfléchissante et agencée pour laisser passer une deuxième partie (Fp2) du faisceau lumineux principal,
- Un deuxième élément (12) comprenant une zone réfléchissante (120) agencée pour générer un deuxième faisceau lumineux réfléchi (Fr2) à partir de la deuxième partie (Fp2) du faisceau lumineux principal, et dans lequel la partie récepteur (2) comporte des moyens photorécepteurs et une unité de traitement connectée aux moyens photorécepteurs et agencée pour déterminer un état de détection en fonction de signaux électriques générés en sortie par les moyens photorécepteurs, les moyens photorécepteurs comportant :
- Un premier organe photorécepteur (21) agencé pour recevoir le premier faisceau lumineux réfléchi (Fr1),
- Un deuxième organe photorécepteur (22) agencé pour recevoir le deuxième faisceau lumineux réfléchi (Fr2), la partie transmetteur (1) et la partie récepteur (2) étant agencées dans une fourche optique (3), la partie transmetteur (1) étant agencée dans une première branche (30) de la fourche optique et la partie récepteur (2) dans une deuxième branche (31) de la fourche optique, permettant ainsi de détecter le passage d'un objet entre les deux branches de la fourche.

2. Système selon la revendication 1, **caractérisé en ce que** :
- le deuxième élément (12) comporte une deuxième ouverture (121) réalisée à travers la zone réfléchissante et agencée pour laisser passer une troisième partie (Fp3) du faisceau lumineux principal,
- la partie transmetteur (1) comporte un troisième élément (13) ayant une zone réfléchissante (130) agencée pour générer un troisième faisceau lumineux réfléchi (Fr3) à partir de la troisième partie (Fp3) du faisceau lumineux principal.

3. Système selon la revendication 2, **caractérisé en ce que** la première ouverture (111) et la deuxième ouverture (121) sont placées dans l'axe de la source lumineuse (10).

4. Système selon la revendication 2 ou 3, **caractérisé en ce que** la deuxième ouverture (121) présente une section d'ouverture inférieure à celle de la première ouverture (111).

5. Système selon l'une des revendications 1 à 4, **caractérisé en ce que** la première ouverture (111) présente une section d'ouverture inférieure au diamètre du faisceau lumineux principal (Fp).

6. Système selon la revendication 2, **caractérisé en ce que** les moyens photorécepteurs comportent :
- Un troisième organe photorécepteur (23) agencé pour recevoir le troisième faisceau lumineux réfléchi (Fr3) de détection d'objet.

7. Système selon la revendication 1, **caractérisé en ce que** la partie récepteur (2) comporte une première lentille convergente (41) agencée pour faire converger le premier faisceau lumineux réfléchi (Fr1) sur le premier organe photorécepteur (21).

8. Système selon la revendication 1 ou 7, **caractérisé en ce que** la partie récepteur (2) comporte une deuxième lentille convergente (42) agencée pour faire converger le deuxième faisceau lumineux réfléchi (Fr2) sur le deuxième organe photorécepteur (22).

9. Système selon la revendication 6, **caractérisé en ce que** la partie récepteur (2) comporte une troisième lentille convergente (43) agencée pour faire converger le troisième faisceau lumineux réfléchi (Fr3) sur le troisième organe photorécepteur (23).

10. Système selon l'une des revendications 1 à 9,
**caractérisé en ce que** la source
lumineuse (10) est une diode électroluminescente.

## Patentansprüche

1. Erfassungssystem, umfassend einen Sendeteil (1) und einen Empfangsteil (2), wobei der Sendeteil (1) mindestens Folgendes umfasst:
- eine Lichtquelle (10), die dazu eingerichtet ist, einen Hauptlichtstrahl (Fp) zu erzeugen,
- ein erstes Element (11), das einen Reflexionsbereich (110), der dazu eingerichtet ist, aus einem ersten Teil (Fp1) des Hauptlichtstrahls einen ersten reflektierten Lichtstrahl (Fr1) zu erzeugen, und eine erste Öffnung (111) umfasst, die durch den Reflexionsbereich hindurch ausgeführt ist und dazu eingerichtet ist, einen zweiten Teil (Fp2) des Hauptlichtstrahls hindurchtreten zu lassen,
- ein zweites Element (12), das einen Reflexionsbereich (120) umfasst, der dazu eingerichtet ist, aus dem zweiten Teil (Fp2) des Hauptlichtstrahls einen zweiten reflektierten Lichtstrahl (Fr2) zu erzeugen,
und wobei
der Empfangsteil (2) Photorezeptormittel und eine Verarbeitungseinheit umfasst, die mit den Photorezeptormitteln verbunden ist und dazu eingerichtet ist, in Abhängigkeit von elektrischen Signalen, die am Ausgang von den Photorezeptormitteln erzeugt werden, einen Erfassungszustand zu bestimmen,
wobei die Photorezeptormittel Folgendes umfassen:
- ein erstes Photorezeptorelement (21), das dazu eingerichtet ist, den ersten reflektierten Lichtstrahl (Fr1) zu empfangen,
- ein zweites Photorezeptorelement (22), das dazu eingerichtet ist, den zweiten reflektierten Lichtstrahl (Fr2) zu empfangen,
wobei der Sendeteil (1) und der Empfangsteil (2) in einer Gabellichtschranke (3) angeordnet sind, wobei der Sendeteil (1) in einem ersten Schenkel (30) der Gabellichtschranke und der Empfangsteil (2) in einem zweiten Schenkel (31) der Gabellichtschranke angeordnet ist, wodurch das Erfassen des Hindurchtretens eines Objekts zwischen den beiden Schenkeln der Gabel ermöglicht wird.

2. System nach Anspruch 1, **dadurch gekennzeichnet, dass**:
- das zweite Element (12) eine zweite Öffnung (121) umfasst, die durch den Reflexionsbereich hindurch ausgeführt ist und dazu eingerichtet ist, einen dritten Teil (Fp3) des Hauptlichtstrahls hindurchtreten zu lassen,
- der Sendeteil (1) ein drittes Element (13) umfasst, das einen Reflexionsbereich (130) aufweist, der dazu eingerichtet ist, aus dem dritten Teil (Fp3) des Hauptlichtstrahls einen dritten reflektierten Lichtstrahl (Fr3) zu erzeugen.

3. System nach Anspruch 2, **dadurch gekennzeichnet, dass** die erste Öffnung (111) und die zweite Öffnung (121) auf der Achse der Lichtquelle (10) angeordnet sind.

4. System nach Anspruch 2 oder 3, **dadurch gekennzeichnet, dass** die zweite Öffnung (121) einen Öffnungsquerschnitt aufweist, der kleiner als der der ersten Öffnung (111) ist.

5. System nach einem der Ansprüche 1 bis 4, **dadurch gekennzeichnet, dass** die erste Öffnung (111) einen Öffnungsquerschnitt aufweist, der kleiner als der Durchmesser des Hauptlichtstrahls (Fp) ist.

6. System nach Anspruch 2, **dadurch gekennzeichnet, dass** die Photorezeptormittel Folgendes umfassen:
- ein drittes Photorezeptorelement (23), das dazu eingerichtet ist, den dritten reflektierten Objekterfassungslichtstrahl (Fr3) zu empfangen.

7. System nach Anspruch 1, **dadurch gekennzeichnet, dass** der Empfangsteil (2) eine erste Sammellinse (41) umfasst, die dazu eingerichtet ist, den ersten reflektierten Lichtstrahl (Fr1) auf dem ersten Photorezeptorelement (21) zu fokussieren.

8. System nach Anspruch 1 oder 7, **dadurch gekennzeichnet, dass** der Empfangsteil (2) eine zweite Sammellinse (42) umfasst, die dazu eingerichtet ist, den zweiten reflektierten Lichtstrahl (Fr2) auf dem zweiten Photorezeptorelement (22) zu fokussieren.

9. System nach Anspruch 6, **dadurch gekennzeichnet, dass** der Empfangsteil (2) eine dritte Sammellinse (43) umfasst, die dazu eingerichtet ist, den dritten reflektierten Lichtstrahl (Fr3) auf dem dritten Photorezeptorelement (23) zu fokussieren.

10. System nach einem der Ansprüche 1 bis 9, **dadurch gekennzeichnet, dass** die Lichtquelle (10) eine Leuchtdiode ist.

## Claims

1. Detection system comprising a transmitter portion (1) and a receiver portion (2), in which the transmitter portion (1) comprises at least:
- a light source (10) arranged to generate a main light beam (Fp);
- a first element (11) comprising a reflective zone (110) arranged to generate a first reflected light beam (Fr1) from a first portion (Fp1) of the main light beam and a first aperture (111) produced through the reflective zone and arranged to let pass a second portion (Fp2) of the main light beam;
- a second element (12) comprising a reflective zone (120) arranged to generate a second reflected light beam (Fr2) from the second portion (Fp2) of the main light beam,
and in which the receiver portion (2) comprises photoreceptor means and a processing unit connected to the photoreceptor means and arranged to determine a detection state depending on generated electrical signals output by the photoreceptor means,
the photoreceptor means comprising:
- a first photoreceptor device (21) arranged to receive the first reflected light beam (Fr1);
- a second photoreceptor device (22) arranged to receive the second reflected light beam (Fr2),
the transmitter portion (1) and the receiver portion (2) being arranged in an optical fork (3), the transmitter portion (1) being arranged in a first arm (30) of the optical fork and the receiver portion (2) in a second arm (31) of the optical fork, thus allowing passage of an object between the two arms of the fork to be detected.

2. System according to Claim 1, **characterized in that**:
- the second element (12) comprises a second aperture (121) produced through the reflective zone and arranged to let pass a third portion (Fp3) of the main light beam; and
- the transmitter portion (1) comprises a third element (13) having a reflective zone (130) arranged to generate a third reflected light beam (Fr3) from the third portion (Fp3) of the main light beam.

3. System according to Claim 2, **characterized in that** the first aperture (111) and the second aperture (121) are placed on the axis of the light source (10).

4. System according to either of Claims 2 and 3, **characterized in that** the second aperture (121) has an aperture cross section smaller than that of the first aperture (111).

5. System according to one of Claims 1 to 4, **characterized in that** the first aperture (111) has an aperture cross section smaller than the diameter of the main light beam (Fp).

6. System according to Claim 2, **characterized in that** the photoreceptor means comprise:
- a third photoreceptor device (23) arranged to receive the third object detecting reflected light beam (Fr3).

7. System according to Claim 1, **characterized in that** the receiver portion (2) comprises a first convergent lens (41) arranged to make the first reflected light beam (Fr1) converge on the first photoreceptor device (21).

8. System according to either of Claims 1 or 7, **characterized in that** the receiver portion (2) comprises a second convergent lens (42) arranged to make the second reflected light beam (Fr2) converge on the second photoreceptor device (22).

9. System according to one of Claim 6, **characterized in that** the receiver portion (2) comprises a third convergent lens (43) arranged to make the third reflected light beam (Fr3) converge on the third photoreceptor device (23).

10. System according to one of Claims 1 to 9, **characterized in that** the light source (10) is a light-emitting diode.
